# EUROPEAN PATENT APPLICATION

(11) **EP 2 732 941 A1**
(43) Date of publication of application: **21.05.2014**
(21) Application number: 12425183.6
(22) Date of filing: 16.11.2012
(51) Int. Cl.: B26D 7/00, B26D 7/26, F16C 33/66, B26D 7/01, B26D 7/18, B26D 1/38

(54) **A cutting unit for cutting a sheet or film material into lengths of predetermined size**

(71) Applicant: Sidel S.p.A. Con Socio Unico, Parma (IT)
(72) Inventor: Carmichael, James, 43100 Parma (IT); Andreato, Cristian, 43100 Parma (IT)
(74) Representative: D'Angelo, Fabio

(57) **Abstract**

There is described a cutting unit (1) for cutting a sheet or film material (2) into lengths of predetermined size; the unit (1) comprises a support frame (5), at least one rotary element (35) provided with at least one rotary blade (8) and supported in a rotatable manner about a given axis (B) by the frame (5) through the interposition of bearing means (36, 37), a lubricant circulation path (Z) for feeding the bearing means (36, 37) with a lubricant during operation of the unit (1), and magnet means (70) arranged at a predetermined location along the lubricant circulation path (Z) to remove metallic debris from the lubricant and avoid said debris to reach the bearing means (36, 37).

## Description

The present invention relates to a cutting unit for cutting a sheet or film material into lengths of predetermined size.

In particular, the present invention relates to a cutting unit for labelling machines, in which a labelling material (web) fed from a reel is cut into lengths of predetermined size (labels) and then applied on items, namely on containers.

It is pointed out that, even if the following description and the drawings refer to the particular field of labelling machines, the present invention can be advantageously applied to any type of cutting unit for precisely cutting a sheet or film material, such as a packaging material for producing carton-type packages of pourable products.

As is known, a typical roll-fed labelling machine basically comprises a carousel for advancing a plurality of containers towards a labelling station along a predetermined container path. The labelling material, in the form of a web wound about a reel, is progressively advanced towards the labelling station along a respective label path, along which a cutting unit is provided for cutting repeated lengths of the labelling material of the desired size and for transferring the resulting stripes of labelling material, typically by means of a vacuum drum, to the labelling station. As the stripes of the labelling material are transferred from the cutting unit toward the labelling station, layers of adhesive are typically applied on their surfaces for subsequently securing them to the surfaces of the containers being fed to the labelling station.

As an alternative, in a sleeve-type labelling machine, the stripes of labelling material are transferred from the cutting unit in order to be wound about rotating mandrels carried by a carousel for forming tubular lengths of labelling material which shall subsequently be applied on the containers.

A cutting unit for these purposes generally comprises a support frame and a rotary blade and a stationary blade - to which reference is often made also as the counterblade - both carried by the support frame and arranged adjacent to the vacuum drum.

In particular, the rotary blade is typically provided on the periphery of a cutting drum carried by the support frame in a rotatable manner about a central vertical axis.

The stationary blade is positioned on the outside of the cutting drum in such a position to be opposed to the rotary blade at a given angular position in each turn of the cutting drum about its axis.

In use, the web of the labelling material is advanced between the stationary and the rotary blade of the cutting unit, the leading edge of the web being picked, by suction, by the vacuum drum.

Typically, the vacuum drum is driven to rotate at a speed higher than the speed at which the labelling material web is advanced along the label path, whereby the vacuum drum applies a pulling force on the leading edge of the web. When, upon rotation, the rotary blade becomes opposed to the stationary blade, the labelling material web is cut. Typically, since there is substantially no direct interference between the stationary blade and the rotary blade, the labelling material web (generally a thin, polymeric film) is weakened along the cutting line and the label is "torn" off the rest of the web by means of the pulling force applied by the vacuum drum. By appropriately setting the vacuum drum rotation speed and the speed at which the labelling material web is advanced, the label length can conveniently be adjusted.

More recently, cutting drums have been introduced which provide more than one blade (typically two) arranged equally spaced about the periphery of the cutting drum. This arrangement makes it possible for the labelling material web to be cut in a wide range of lengths; in particular, shorter labels can be obtained and conveniently handled if only a portion of the revolution of the cutting drum is necessary for achieving the alignment and contraposition of the rotary blade and the stationary blade.

The lateral surface of the cutting drum has a plurality of openings selectively connectable, during their revolution about the cutting drum axis:
a) with a source of vacuum for holding the labelling material web as it travels and basically until it is cut; and
b) with a source of a positive pressure (e.g. of compressed air), to which reference shall be made in the following as "blow-off", for facilitating the detachment of a leading portion of the labelling material web off the surface of the cutting drum, thereby favoring the transfer thereof onto the surface of the vacuum drum, and under the influence of the pulling force mentioned above.

Further to a cutting drum and a stationary blade, cutting units for roll-fed labelling machines typically comprise blowing means for directing a flow of compressed air (a so-called "air curtain") towards the leading portion of the labelling material web as it transfers onto the vacuum drum. More particularly, these blowing means consist of a so-called "blow block" comprising:
- a first blower adapted to supply a first flow of compressed air directed tangentially relative to the cutting drum, in order to compensate for the Venturi effect potentially caused by the blow-off, which could possibly pull the labelling material web leading portion back from the vacuum drum transfer portion; and
- a second blower adapted to supply a second flow of compressed air directed onto the labelling material web while it is transferred to the vacuum drum, with a view to securing it against the lateral surface of the latter as it passes under the control of the vacuum drum suction means.

In practice, the tangential speed of the vacuum drum is typically higher than the speed at which the labelling material web is advanced about the cutting drum. Because of this speed difference, at the very point of cut the label is subjected to a virtually instantaneous acceleration, because the label mass is negligible with respect to the entity of the pulling force acting upon it.

The second flow of air supplied by the second blower is mainly intended to make sure that, despite the sudden acceleration of the newly-cut label, the trailing portion of the latter adhere to the surface of the vacuum drum so as to be properly picked by the relative suction means.

The blow block is, therefore, arranged downstream from the stationary blade with respect to the direction of advancement of the labelling material web.

Accurate synchronization of the cutting drum and the vacuum drum is necessary for a good machine performance. Furthermore, care must be taken when positioning the stationary blade and the blow block relative to the rotation axis (i.e. the shaft) of the cutting drum.

In this type of configuration of the cutting units, the precise positioning of the cutting drum on its rotation axis and the capacity of the cutting drum to maintain its rotary movements within given operational tolerances are of utmost importance to ensure that the labels are cut in the correct way, have the correct size and are transferred in the correct position on the vacuum drum.

The cutting drum is typically mounted on a central shaft, which is in turn carried by the support frame through the interposition of a pair of support bearings. In order to ensure a correct functioning of the cutting drum, the support bearings are constantly fed with a lubricant substance, e.g. oil, which flows in a lubricant circulation circuit formed in the support frame.

The Applicant has noted that small quantities of metallic debris, normally present in the lubricant circulation circuit, produce damages and attrition to the bearings causing loss of the operational tolerances and of the preload under which such bearings are initially mounted between the cutting drum shaft and the support frame; this leads to premature failure of the cutting system.

It is an object of the present invention to provide a cutting unit for cutting a sheet or film material into lengths of predetermined size, which makes it possible to overcome the above drawbacks in straightforward and inexpensive fashion.

This object is achieved by a cutting unit as claimed in claim 1.

A non-limiting embodiment of the present invention will be described in the following by way of example and with reference to the accompanying drawings, in which:
Figure 1 shows a schematic horizontal section view of a cutting unit in accordance with the present invention and cooperating with a vacuum drum during a label cutting operation;
Figure 2 shows a larger-scale perspective view of the Figure 1 cutting unit; and
Figure 3 shows a larger-scale section along line III-III in Figure 2.

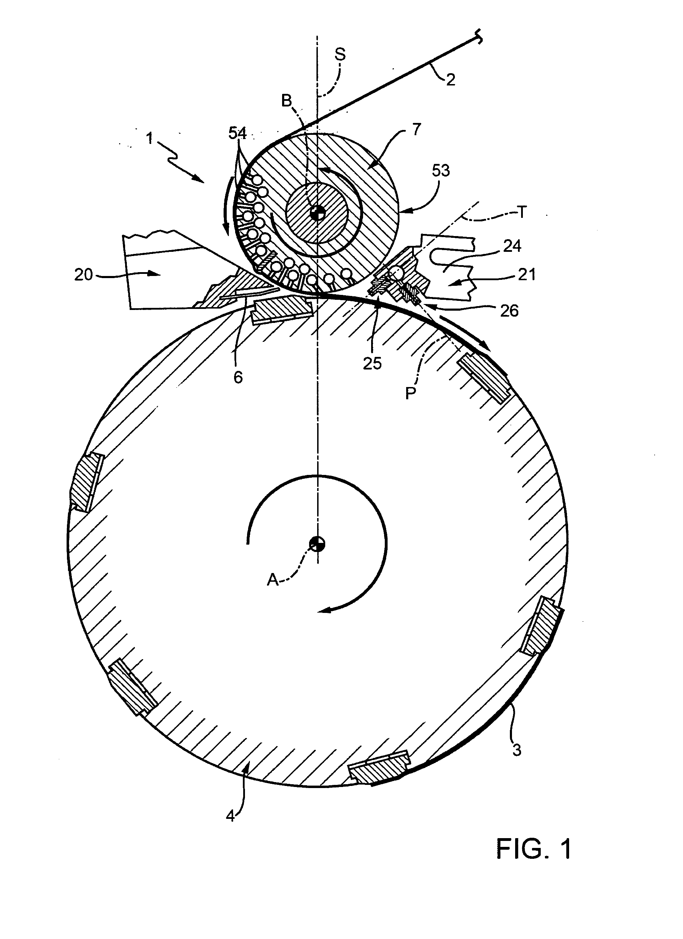

Number 1 in Figures 1 to 3 indicates as a whole a cutting unit, particularly for a roll-fed labelling machine (known per se and not shown).

Cutting unit 1 is fed with a web 2 of film or sheet labelling material and is adapted to cut the web 2 into a plurality of labels 3 of predetermined size that are picked by suction by a vacuum drum 4, known per se and only schematically shown; in particular, vacuum drum 4 has a rotation axis A, preferably extending in a vertical direction, and is arranged downstream from cutting unit 1 with respect to a direction of advancement of the labelling material web 2.

The labels 3 are then fed to the labelling machine and applied in a known manner to respective containers (not shown).

Cutting unit 1 basically comprises a support frame 5, a stationary blade 6, carried by support frame 5 in a fixed position, and a cutting drum 7 carried by the support frame 5 in a rotatable manner about a relative axis B, parallel to axis A, and bearing at least one rotary blade 8 arranged peripherally.

The web 2 of labelling material is in use advanced between stationary blade 6 and rotary blade 8 of cutting unit 1, so that the leading edge of the web 2 can be picked, by suction, by vacuum drum 4.

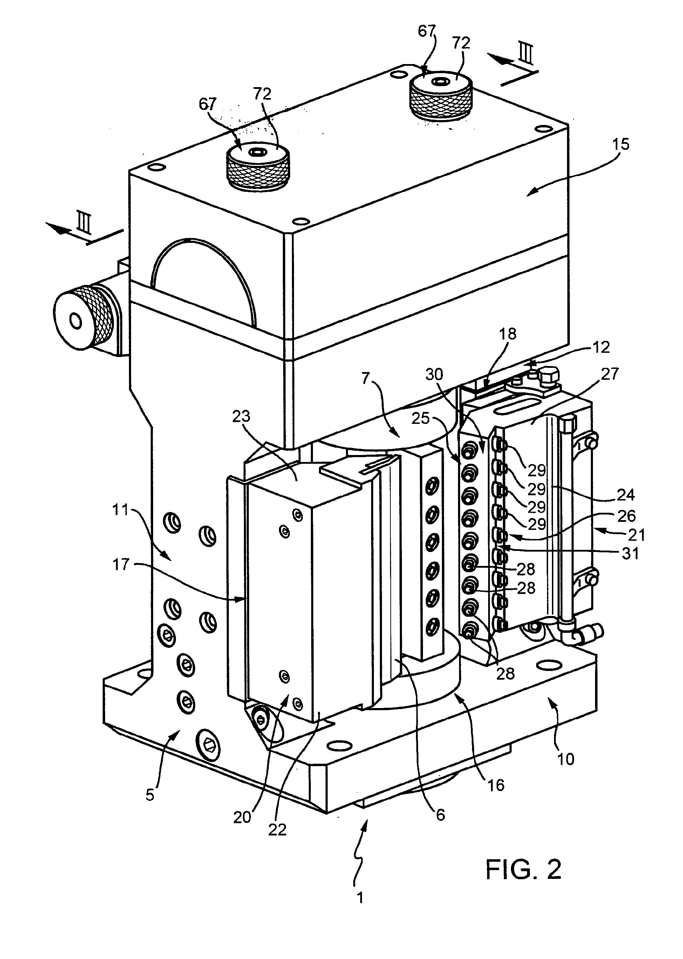

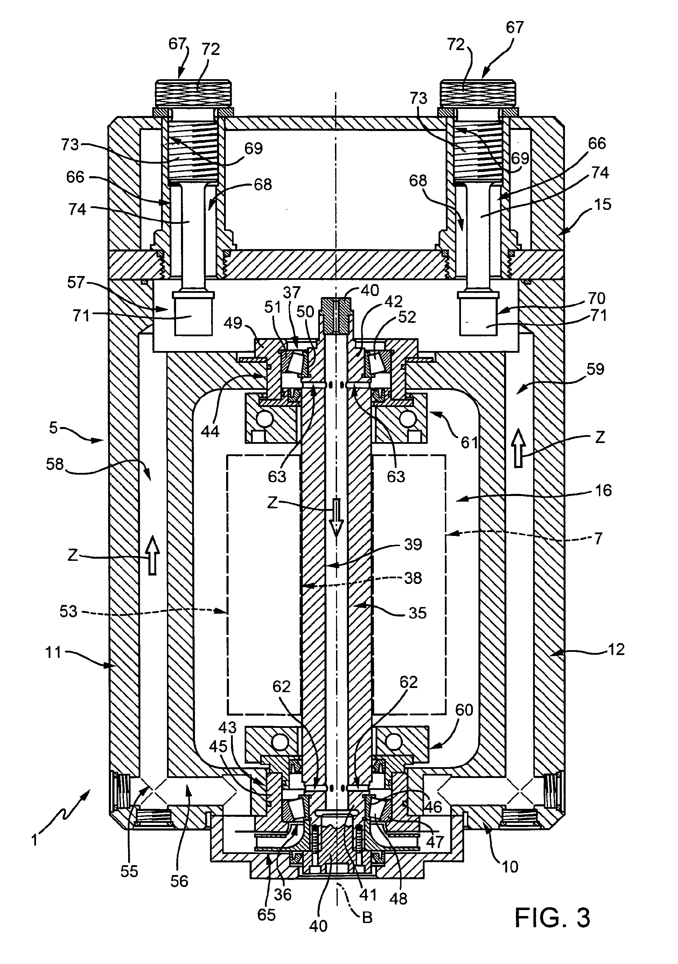

With reference to Figures 2 and 3, support frame 5 comprises a horizontal base 10, two side pillars 11, 12, and a top bridge structure 15 extending horizontally and transversally to pillars 11, 12 and connecting the top ends of the pillars 11, 12.

Support frame 5 defines centrally, between pillars 11 and 12, a seat 16 for cutting drum 7; the seat 16 identifies the rotation axis A of the cutting drum 7; such axis extends parallel to pillars 11, 12 and between base 10 and top bridge structure 15.

Support frame 5 also defines two further seats 17, 18 adapted to house respectively a stationary blade block 20, carrying stationary blade 6, and a blow assembly 21 for directing a flow of compressed air (a so-called "air curtain") towards the leading portion of the labelling material web 2 as it is transferred onto vacuum drum 4.

In particular, seats 17, 18 are arranged symmetrically with respect to a plane S (Figure 1) identified by the rotation axis A of vacuum drum 4 and the rotation axis B of cutting drum 7.

As shown in Figure 2, seat 17 is located adjacent to pillar 11 and seat 18 is located adjacent to pillar 12; both seats 17, 18 are formed on support frame 5 in positions interposed between vacuum drum 4 and the respective pillars 11, 12.

It is pointed out that seats 17, 18 are adapted to receive either of stationary blade block 20 and blow assembly 21, so that cutting unit 1 can be assembled in either right-hand or left-hand configuration.

In practice, stationary blade block 20 and blow assembly 21 have substantially symmetrical structures and are reversible, so as to be conveniently arranged and fixed in either seat 11, 12. In other words, stationary blade block 20 and blow assembly 21 are substantially interchangeable.

With reference to Figure 2, stationary blade block 20 comprises a prismatic main portion 22, secured to pillar 11, and a protruding lateral portion 23 extending from the main portion 22 towards cutting drum 7 and blow assembly 21 and carrying stationary blade 6.

In greater detail, stationary blade block 20 is adapted to support stationary blade 6 in a predetermined position relative to cutting drum 7, i.e. at a given radial distance from the relative rotation axis B.

Stationary blade 6 is preferably releasably fixed to lateral portion 23 of stationary blade block 20. Even more preferably, cutting unit 1 comprises means (not shown) for adjusting the position of stationary blade 6 with respect to cutting drum 7 - namely for adjusting the radial distance of the cutting edge of stationary blade 6 from rotation axis B of cutting drum 7. In some embodiments, different types of stationary blades may be mounted on stationary blade block 20, thereby making it possible to adapt cutting unit 1 to different specific needs and machine configurations.

Blow assembly 21 consists of a so-called "blow block" 24, which is arranged downstream from stationary blade 6 with respect to the direction of advancement of the labelling material web 2, and comprises:
- a first blower 25 adapted to supply a first flow of compressed air directed tangentially relative to cutting drum 7; and
- a second blower 26 adapted to supply a second flow of compressed air directed onto the labelling material web 2 while it is transferred to vacuum drum 4.

The first flow of compressed air is intended to compensate for the Venturi effect potentially caused by the blow-off, which could possibly pull the labelling material web leading portion back from the vacuum drum transfer portion. On the other hand, the second flow of compressed air has the goal of securing the labelling material web 2 against the lateral surface of vacuum drum 4 while the leading edge of the labelling material passes under the control of the vacuum drum suction means.

In greater detail, blow block 24 has a body 27 internally defining a first and a second plurality of ducts 28, 29 (only partially shown in Figure 1) connectable to a source of positive pressure (not shown) and opening on respective first and second surfaces 30, 31 of body 27.

In particular, first and second plurality of ducts 28, 29 may either be independently connected to two separate sources or to a same source of positive pressure.

The first plurality of ducts 28 extends, at an end portion thereof leading to first surface 30, along an axis T substantially tangential relative to cutting drum 7, thereby substantially defining the first blower 25. The second plurality of ducts 29 extends, at an end portion thereof leading to second surface 31, along an axis P transversal to axis T, thereby substantially defining the second blower 26.

With reference to Figure 3, cutting drum 7 is mounted on a central shaft 35 of axis B, in turn supported by frame 5 through the interposition of a pair of support bearings 36, 37, in the example shown a pair of tapered roller bearings.

In particular, shaft 35 engages a central through hole 38 of cutting drum 7 and is coupled to such drum in order to rotate integrally with the latter about axis B.

Shaft 35 has an axial through hole 39, whose function will be explained later on and which is hermetically closed at the opposite axial ends by respective plugs 40.

Shaft 35 has opposite end portions 41, 42 axially protruding from cutting drum 7 and engaging respective seats 43, 44 formed in frame 5; more specifically, seat 43 is formed into horizontal base 10, whilst seat 44 is formed into top bridge structure 15.

As visible in Figure 3, support bearing 36 is interposed between end portion 41 of shaft 35 and a bushing 45 fitted to seat 43 of base 10 and secured thereto. In greater detail, support bearing 36 has an inner ring 46 coupled to end portion 41 of shaft 35, an outer ring 47 coupled to bushing 45 of base 10, and a plurality of tapered rollers 48 interposed between inner ring 46 and outer ring 47.

In a completely analogous manner, support bearing 37 is interposed between end portion 42 of shaft 35 and a bushing 49 fitted to seat 44 of top bridge structure 15 and secured thereto. In greater detail, support bearing 37 has an inner ring 50 coupled to end portion 42 of shaft 35, an outer ring 51 coupled to bushing 49 of top bridge structure 15, and a plurality of tapered rollers 52 interposed between inner ring 50 and outer ring 51.

Cutting drum 7 has a lateral surface 53 provided with a plurality of openings 54 (Figure 1) selectively connectable, during their revolution about axis B:
a) with a source of vacuum for holding the labelling material web 2 as it travels and basically until is cut; and
b) with a source of positive pressure (e.g. of compressed air), to which reference shall also be made, in the following, as "blow-off" source, for facilitating the detachment of a leading portion of the labelling material web 2 off the lateral surface 53 of cutting drum 7, thereby favoring the transfer of the labelling material web 2 onto the surface of vacuum drum 4, and under the influence of the pulling force mentioned above.

Rotary blade 8 (Figure 1) is fitted to cutting drum 7 so as to protrude with its cutting edge 8a from lateral surface 53.

As a possible alternative not shown, cutting drum 7 may comprise a plurality (typically two) of rotary blades 8 arranged equally spaced about axis B and protruding from lateral surface 53.

With reference to Figure 3, unit 1 further includes a lubricant circulation circuit 55 for feeding support bearings 36, 37 with a lubricant, e.g. oil, during operation.

Lubricant circulation circuit 55 is basically formed into frame 5 and includes:
- a bottom chamber 56 formed in base 10 and communicating with seat 43 at the bottom side thereof;
- a top chamber 57 formed in top bridge structure 15 and communicating with seat 44 at the top side thereof; and
- two vertical conduits 58, 59 formed into the respective pillars 11, 12 and connecting bottom chamber 56 with top chamber 57.

In order to prevent the lubricant from reaching the seat 16, in which cutting drum 7 cooperates with the labelling material web 2, two sealing assemblies 60, 61 hermetically close respective seats 43, 44 from the sides facing the cutting drum 7 and are engaged in a fluid-tight manner by the respective end portions 41, 42 of shaft 35.

Lubricant circulation circuit 55 further includes the hole 39 of shaft 35, which is connected to bottom and top chambers 56, 57 through respective first and second radial through holes 62, 63 formed in the body of the shaft 35.

In particular, radial holes 62 are arranged on the opposite part of support bearing 36 with respect to bottom chamber 56, whilst radial holes 63 are arranged on the opposite part of support bearing 37 with respect to top chamber 57.

In other words, radial holes 62 are arranged above support bearing 36 in order to feed the latter with the lubricant coming from hole 39 of shaft 35; radial holes 63 are instead arranged below support bearing 37 in order to feed the hole 39 of shaft 35 with the lubricant coming from the support bearing 37.

Lubricant circulation circuit 55 further includes an impeller 65 fitted to end portion 41 of shaft 35 and rotating in bottom chamber 56 to pump the lubricant through the circuit 55.

In view of the above, bottom chamber 56 of base 10, vertical conduits 58, 59 of pillars 11, 12, top chamber 57 of top bridge structure 15, radial holes 63, axial hole 39 and radial holes 64 of shaft 35 define a closed-loop lubricant circulation path Z.

Lubricant circulation circuit 55 also comprises one or more inlet mouths 66, in the example shown two, for filling up the circuit with the lubricant and which are normally closed by respective caps 67, in the example shown of screw-type.

In particular, each inlet mouth 66 consists of a vertical duct 68 connecting top chamber 57 with a relative hole 69 formed in the top surface of top bridge structure 15.

Unit 1 advantageously comprises magnet means 70 arranged in a predetermined location along the lubricant circulation path Z to remove metallic debris from the lubricant and avoid said debris to reach support bearings 36, 37.

Preferably, magnet means 70 comprise one or more magnets 71, in the example shown two, carried by respective caps 67.

In greater detail, each cap 67 has a closure portion 72 for closing the relative hole 69, a coupling portion 73 adjacent to closure portion 72 and secured in a releasable manner to the wall of duct 68 and a stem portion 74, which extends axially from the opposite side of coupling portion 73 with respect to closure portion 72, engages duct 68 with radial play and carries, at its free end, a relative magnet 71; magnets 71 are therefore completely housed in top chamber 57.

In use, the labelling material web 2 is fed from a reel (known per se and not shown) to cutting unit 1 in order to be cut into lengths of predetermined size defining labels 3.

In particular, the labelling material web 2 is wound about lateral surface 53 of cutting drum 7 and positioned so as to place the zone destined to be cut over rotary blade 8.

During rotation of shaft 35 and cutting drum 7 about axis B, the labelling material web 2 is therefore advanced between the stationary blade 6 and the rotary blade 8, the leading edge of the web 2 being picked, by suction, by vacuum drum 4 (see Figure 1).

As it is known, vacuum drum 4 is driven to rotate at a speed higher than the speed at which the labelling material web 2 is advanced by cutting drum 7. Therefore, the vacuum drum 4 applies a pulling force on the leading edge of the web 2. When, upon rotation of shaft 35 and cutting drum 7, the rotary blade 8 becomes opposed to the stationary blade 6, the labelling material web 2 is cut. Since there is substantially no direct interference between the stationary blade 6 and the rotary blade 8, the labelling material web 2 is weakened along the cutting line and one label 3 is "torn" off the rest of the web 2 by means of the pulling force applied by the vacuum drum 4.

The action of blowing assembly 21 allows to direct a flow of compressed air towards the leading portion of the labelling material web 2 as it is transferred onto vacuum drum 4.

In particular, a first flow of compressed air is directed by blower 25 tangentially relative to cutting drum 7 in order to compensate for the Venturi effect caused by the blow-off, which could possibly pull the labelling material web leading portion back from the vacuum drum 4; a second flow of compressed air is instead directed by blower 26 onto the labelling material web 2 while it is transferred to vacuum drum 4 in order to secure the labelling material web 2 against the lateral surface 53 of the vacuum drum 4.

The rotation of shaft 35 about axis B also produces a corresponding rotation of impeller 65 in bottom chamber 56 of lubricant circulation circuit 55. The impeller 65 produces a pumping action on the lubricant, which flows through vertical conduits 58, 59 to reach top chamber 57. Here, the lubricant gets down towards bottom chamber 56 by passing through support bearing 37 and then support bearing 36. More specifically, the lubricant wets support bearing 37 and then flows into hole 39 of shaft 35 by passing through radial holes 62. When the lubricant reaches base 10, it flows through radial holes 63 and wets support bearing 36 before coming back to bottom chamber 56, from which the lubricant will be again pumped by impeller 65 to perform another loop through the lubricant circulation circuit 55.

During each loop, the lubricant wets magnets 71, which draw any metallic debris present in the lubricant. This allows to improve the quality of the lubricant reaching the support bearings 36, 37, which therefore will have an increased life and will ensure better performances.

The metal deposit on the magnets 71 can be easily removed by simply detaching caps 67 from supply mouths 66; in this way, the magnets 71 can be cleaned without any need to drain all of the lubricant from the circuit 55.

Clearly, changes may be made to cutting unit 1 as described and illustrated herein without, however, departing from the scope of protection as defined in the accompanying claims.

## Claims

1. A cutting unit (1) for cutting a sheet or film material (2) into lengths of predetermined size, said unit (1) comprising:
- a support frame (5);
- at least one rotary element (35) provided with at least one rotary blade (8) and supported in a rotatable manner about a given axis (B) by said frame (5) through the interposition of bearing means (36, 37); and
- a lubricant circulation path (Z) for feeding said bearing means (36, 37) with a lubricant during operation of the unit (1);
**characterized by** further comprising magnet means (70) arranged at a predetermined location along the lubricant circulation path (Z) to remove metallic debris from the lubricant and avoid said debris to reach the bearing means (36, 37).

2. The cutting unit as claimed in claim 1, wherein said lubricant circulation path (Z) is defined by a lubricant circulation circuit (55) formed at least in part through said frame (5).

3. The cutting unit as claimed in claim 2, wherein said lubricant circulation circuit (55) comprises at least one inlet mouth (66) for filling up the circuit (55) with the lubricant and which is normally closed by a releasable cap (67), and wherein said magnet means (70) comprise at least one magnet (71) carried by said cap (67).

4. The cutting unit as claimed in claim 3, wherein said cap (67) has a closure portion (72) for closing the mouth (66) from the outer side, and a stem portion (74) extending through the mouth (66) and carrying said magnet (71) so as to locate the magnet (71) along the lubricant circulation path (Z).

5. The cutting unit as claimed in any one of claims 2 to 4, wherein said bearing means comprise at least two bearing supports (36, 37) acting on opposite axial end portions (41, 42) of said rotary element (35), and wherein said lubricant circulation circuit (55) comprises two chambers (56, 57) formed in said frame (5) in positions adjacent to the respective bearing supports (36, 37), and conduit means (58, 59) for connecting said chambers (56, 57).

6. The cutting unit as claimed in claim 5, wherein said lubricant circulation circuit (55) includes an impeller (65) fitted to one (41) of said end portions (41, 42) of said rotary element (35) and rotating in one (56) of said chambers (56, 57) to pump the lubricant through the circuit (55).

7. The cutting unit as claimed in claim 5 or 6, wherein said rotary blade (8) is borne peripherally by a rotary drum (7) in turn coupled onto said rotary element (35) and arranged in a seat (16) of said frame (5) through which the sheet or film material (2) is fed, wherein two sealing assemblies (60, 61) hermetically close the respective seats (43, 44) housing said support bearings (36, 37) from the sides facing said drum (7) and are engaged in a fluid-tight manner by the respective end portions (41, 42) of said rotary element (35) in order to prevent the lubricant from reaching said seat (16), and wherein said lubricant circulation circuit (55) further includes an axial hole (39) formed in said rotary element (35) and connected to said seats (43, 44) of said support bearings (36, 37) through respective radial through holes (62, 63) formed in the body of the rotary element (35).

8. The cutting unit as claimed in anyone of the foregoing claims, further comprising a stationary blade group (20) supporting a stationary blade (6) in a predetermined position relative to a lateral surface (53) of said rotary drum (7).

9. The cutting unit as claimed in anyone of claims 5 to 8, wherein said frame (5) comprises a base (10), two pillars (11, 12) and a top bridge structure (15) extending transversally to said pillars (11, 12); said base (10) and said top bridge structure (15) defining said chambers (56, 57), and said pillars (11, 12) defining said conduit means (58, 59); said base (10), said pillars (11, 12) and said top bridge structure (15) delimiting said seat (16) for said rotary drum (7).
